# EUROPEAN PATENT APPLICATION

(11) **EP 4 737 906 A1**
(43) Date of publication of application: **06.05.2026**
(21) Application number: 24831784.4
(22) Date of filing: 19.06.2024
(51) Int. Cl.: G01N 35/02, G01N 35/10

(54) **LIQUID STIRRING METHOD FOR AUTOMATIC ANALYSIS DEVICE, AND AUTOMATIC ANALYSIS DEVICE CAPABLE OF EXECUTING SAME**

(30) Priority: 30.06.2023 JP 2023107616
(71) Applicant: HITACHI HIGH-TECH CORPORATION, Tokyo 105-6409 (JP)
(72) Inventor: MATSUDA Kyohei, Tokyo 105-6409 (JP)
(74) Representative: MERH-IP Matias Erny Reichl Hoffmann Patentanwälte PartG mbB
(86) International application number: PCT/JP2024/022180
(87) International publication number: WO 2025/004922

(57) **Abstract**

To provide a discharge stirring method for sufficient stirring effects even in the case of the analysis item using the reagent liable to form aggregates, and an automatic analyzer implementing the method.

A liquid stirring method for an automatic analyzer provided with a dispensing probe for aspirating and/or discharging a liquid, includes: a first aspiration step of aspirating a first liquid to be stirred by the dispensing probe; a second aspiration step of aspirating a second liquid to be stirred in a state where the first liquid to be stirred has been received in the dispensing probe; and a first stirring step of discharging the first liquid to be stirred and the second liquid to be stirred into a container. In the liquid stirring method, in the second aspiration step, air is also aspirated during aspiration of the second liquid to be stirred, and in the first stirring step, the first liquid to be stirred and the second liquid to be stirred are discharged into the container from above a liquid level of the liquid received in the container.

## Description

### Technical Field

This invention relates to a liquid stirring method for an automatic analyzer and an automatic analyzer capable of implementing the method.

### Background Art

In medical field, automatic analyzers are used to perform qualitative and quantitative analysis of any substance in a sample by mixing reagents containing enzymes or antibodies that react to specific biological components or chemical substances in blood, serum, urine, or other samples.

In order to avoid an increase in size, small-sized automatic analyzers may use a discharge stirring method that uses a liquid dispensing mechanism to stir liquid, instead of providing a stirring mechanism that uses a dedicated stirring rod. This is a technique in which a liquid to be stirred is sequentially aspirated into a dispensing mechanism and then simultaneously discharged to stir the liquid. Since a stirring force is smaller than that achieved by using a stirring rod, various techniques have been proposed to improve the stirring force.

For example, Patent Literature 1 discloses a technique in which, when aspirating a liquid to be stirred into a dispensing probe (pipette), instead of aspirating the entire amount of liquid, segmental air is introduced into the tip of pipette tip during aspirating, and then the aspirating and discharging of the liquid to be stirred is repeated to improve a stirring effect.

### Citation List

### Patent Literature

Patent Literature 1: Japanese Unexamined Patent Application Publication No. 2011-107089

### Summary of Invention

### Technical Problem

However, depending on analysis items, a stronger stirring capacity than that of the method of Patent Literature 1 may be required. For example, in analysis items using reagents that easily aggregate, there is a concern that accurate analysis results cannot be obtained unless aggregates are sufficiently finely divided by stirring.

Although the technique disclosed in Patent Literature 1 can be expected to have a higher stirring effect than conventional dispensing stirring, by making the liquid contain bubbles and oscillating the bubbles in the liquid, the stirring effect may not be sufficient for the analysis items described above.

An object of the present invention is to provide a discharge stirring method for sufficient stirring effects even in the case of the analysis item using the reagent liable to form aggregates, and an automatic analyzer implementing the method.

### Solution to Problem

The present invention for achieving the above object is as follows.

A liquid stirring method for an automatic analyzer and an automatic analyzer capable of implementing the method are provided. The liquid stirring method for an automatic analyzer is provided with a dispensing probe for aspirating and/or discharging a liquid, and the method includes: a first aspiration step of aspirating a first liquid to be stirred by the dispensing probe; a second aspiration step of aspirating a second liquid to be stirred in a state where the first liquid to be stirred has been received in the dispensing probe; and a first stirring step of discharging the first liquid to be stirred and the second liquid to be stirred into a container. In the second aspiration step, air is also aspirated during aspiration of the second liquid to be stirred, and in the first stirring step, the first liquid to be stirred and the second liquid to be stirred are discharged into the container from above a liquid level of the liquid received in the container. Advantageous Effects of Invention

It is possible to provide a dispensing stirring method for sufficient stirring effects even in the case of the analysis item using the reagent liable to form aggregates, and an automatic analyzer implementing the method.

### Brief Description of Drawings

[FIG. 1] FIG. 1 schematically illustrates an example of an overall structure of an automatic analyzer.
[FIG. 2] FIG. 2 schematically illustrates an example of a structure of a dispensing unit.
[FIG. 3] FIG. 3 is a flowchart representing an operation flow for a user to select a stirring mode.
[FIG. 4] FIG. 4 represents respective effects of the first mode and the second mode, and a correlation among those effects.
[FIG. 5] FIG. 5 schematically illustrates a double-stirring operation in the first mode.
[FIG. 6] FIG. 6 schematically illustrates a single-stirring operation in the second mode.

### Description of Embodiments

Hereinbelow, preferred embodiments of an automatic analyzer according to the present invention will be described in accordance with the accompanying drawings.

It should be noted that in the following description and accompanying drawings, constituting elements having the same function configurations are indicated by the same reference numerals, and the overlapped description is thus omitted. It should be noted that the technical scope of the present invention is not limited to the embodiments described above. Embodiment

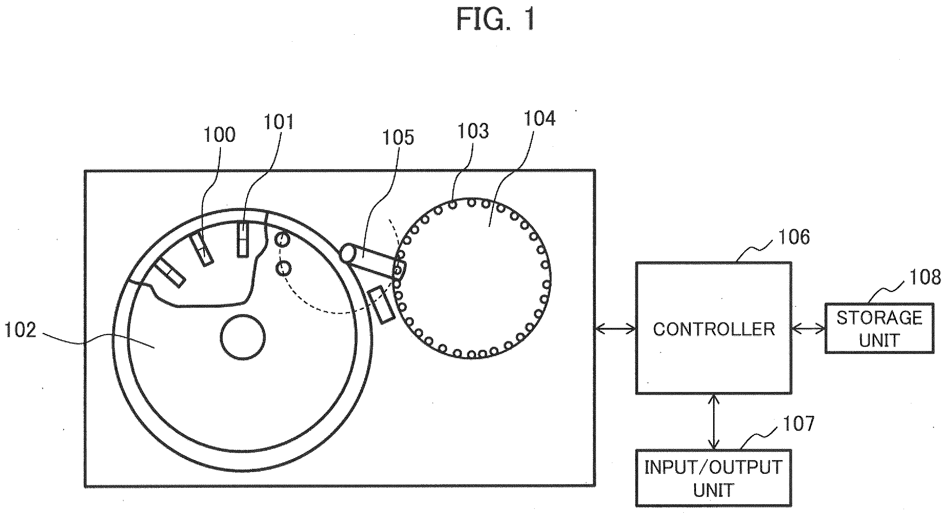

An example of the overall structure of an automatic analyzer will be described with reference to FIG. 1. The automatic analyzer analyzes specific components in samples such as blood and urine provided by patients, and has a sample/reagent disk (hereinafter simply referred to as "disk") 102, a dispensing unit 105, an incubator (reaction disk) 104, a controller 106, an input/output unit 107, and a storage unit 108. Each unit will be described below.

The disk 102 stores a sample container 100 receiving samples and a reagent bottle 101 receiving reagents, and also transports the sample container 100 and the reagent bottle 101 to a position accessible by the dispensing unit 105.

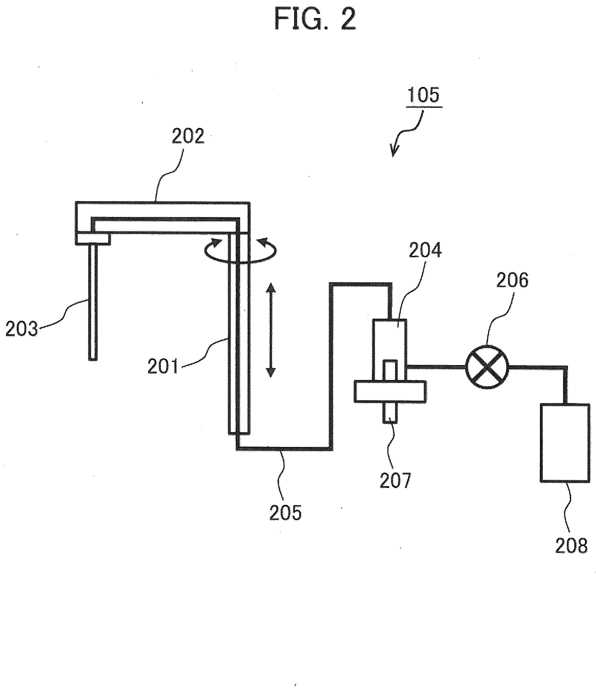

The dispensing unit 105 dispenses and stirs the sample or reagent from the sample container 100 or the reagent bottle 101 into a reaction container 103 stored in the incubator 104. Detailed parameters of dispensing and stirring are controlled by the controller 106. The sample and reagent may be dispensed by a single dispensing unit 105, or two units, one for sample dispensing and one for reagent dispensing, may be provided and each dispensed separately. A more detailed configuration of the dispensing unit 105 will be described below with reference to FIG. 2.

The incubator 104 stores the reaction container 103 receiving a liquid mixture of the sample and the reagent within a temperature range that allows the liquid mixture to react, and transports the reaction container 103 to a position accessible to the dispensing unit 105. The liquid mixture in the reaction container 103 becomes a reaction liquid to be used for the measurement by storing the reaction container 103 within a predetermined temperature range.

The controller 106 is a computer that controls the operation of each unit.

The input/output unit 107 is a device that receives input of data necessary for analysis and displays results of the analysis, such as a keyboard, mouse, touch panel, or liquid crystal display.

The storage unit 108 is a device that stores data necessary for analysis and the results of the analysis, such as a hard disk drive (HDD) or solid state drive (SSD).

An example of a structure of the dispensing unit 105 will be described with reference to FIG. 2. The dispensing unit 105 has a shaft 201, an arm 202, a dispensing probe 203, a syringe pump 204, a tube 205, and an electromagnetic valve 206.

The shaft 201 is a hollow member that extends vertically and can be moved vertically. The arm 202 is a hollow member extending horizontally, to which the upper end of shaft 201 is connected at one end and the dispensing probe 203 is attached at the other end, and is rotated around the shaft 201 as a rotation axis. Rotation of the arm 202 moves the dispensing probe 203 directly above the sample container 100 or the reagent bottle 101.

The dispensing probe 203 is a thin tube that is inserted into the sample container 100 or the reagent bottle 101 by the vertical movement of the shaft 201, its upper end is connected to the tube 205. The tube 205 passes through the arm 202 and the shaft 201 to connect the dispensing probe 203 to the syringe pump 204. The dispensing probe 203 may be a hollow metal tube, and may have a disposable dispensing tip attached to its tip.

The syringe pump 204 draws in or pushes out system water in the dispensing probe 203 by driving a plunger 207 to cause aspiration or discharge of samples, reagents, or air from the lower end of the dispensing probe 203. Liquids such as samples and reagents are dispensed by aspiration, which draws in the system water to create negative pressure inside the dispensing probe, and discharge, which pushes out the system water to create positive pressure inside the dispensing probe.

The electromagnetic valve 206 is provided between the syringe pump 204 and a system water container 208 that receives the system water, and is closed while a sample or other material is being dispensed. When dispensing is completed, the electromagnetic valve 206 is opened, and the inner wall of the dispensing probe 203 is washed with the system water supplied from the system water container 208, and the inside of the tube 205 is filled with system water. That is, before dispensing, the tube 205 is filled with the system water.

As an operation example of the dispensing unit 105 controlled by the controller 106, a case will be described that a reagent is discharged into the reaction container 103 into which reaction liquid has already been discharged, a liquid in the reaction container 103 is made into a liquid mixture, and the liquid mixture is stirred by the aspiration and discharge operation of the dispensing probe 203.

This series of operations is referred to as discharge stirring operation, the liquid to be discharged is not limited to a reagent, but may be a sample or water.

Discharge stirring method will be described below.

Assume that liquid A is in the reaction container 103 beforehand. Discharging liquid into the reaction container 103 is referred to as discharge. After discharging liquid B into the reaction container 103, liquid A and liquid B are simultaneously aspirated using the dispensing probe 203 in order to mix the discharged liquid B and liquid A. The aspirated liquid A and liquid B are then discharged back into the reaction container. This operation is referred to as re-discharge.

This causes liquid A and liquid B to mix to form liquid mixture C. The series of operations to mix liquid A and liquid B to make liquid mixture C is referred to as discharge stirring.

An advantage of discharge stirring is that it does not require a dedicated stirring unit to be built into an apparatus, thus saving space and cost. However, compared to a general stirring method using a stirring rod, a stirring efficiency of discharge stirring can be lower depending on a substance to be stirred. That is, although discharge stirring has sufficient homogenizing capacity to mix liquid A and liquid B, when liquid A and liquid B contain fine molecular bonds (aggregates, etc.), the micronizing capacity to dissociate those bonds may be inferior to other stirring methods.

One of the causes of difference in stirring capacity is a difference in shear force during stirring. In spatula stirring, a spatula rotates in a liquid to be stirred, exerting a force to shear the aggregates. In contrast, the force to shear the aggregates by discharge stirring may be insufficient.

This embodiment is characterized in that when liquid mixture C aspirated into the dispensing probe is discharged into the container, it is discharged from above a liquid level in the container. When liquid mixture C collides with the liquid level, a shearing force acts on the aggregates. When discharging liquid from the dispensing probe, liquid is generally discharged with the tip of the dispensing probe below the liquid level in order to avoid splashing discharged liquid on the inner wall of the container or entraining bubbles. In the present invention, in order to apply a shear force to the liquid to be stirred, the liquid is intentionally discharged from above the liquid level.

In other words, this embodiment is characterized in that it comprises: a first aspiration step of aspirating liquid A, that is a first liquid to be stirred, by the dispensing probe; a second aspiration step of aspirating a second liquid to be stirred in a state where the first liquid to be stirred has been received in the dispensing probe; and a first stirring step of discharging the first liquid to be stirred and the second liquid to be stirred into a container, in which: in the second aspiration step, air is also aspirated during aspiration of the second liquid to be stirred; and in the first stirring step, the first liquid to be stirred and the second liquid to be stirred are discharged into the container from above the liquid level of the liquid received in the container.

However, depending on the analysis item, the presence of bubbles in the liquid mixture (reaction liquid) may interfere with the analysis. Therefore, the second characteristic of this embodiment is that for analysis items where aggregates are present in the liquid mixture and need to be micronized, the above-mentioned discharge stirring is performed, and for analysis items where no aggregates are present and it is not necessary to apply shear force to the liquid mixture, the liquid is discharged with the tip of the dispensing probe below the liquid level as in the conventional method, thereby avoiding the entrainment of bubbles and avoiding adverse effects such as splashing of the liquid, to switch the discharge stirring method.

Furthermore, as a third characteristic of this embodiment, in order to increase the stirring efficiency in the discharge stirring, the following methods are appropriately selected according to the analysis item: 1. increasing the re-discharge amount, 2. accelerating the re-discharge speed, and 3. mixing gas and liquid. Item 1 makes a movement of liquid more dynamic, promoting homogenization of liquids. Item 2 increases the Reynolds number of liquid, forming turbulence, which not only homogenizes liquids but also improves micronizing capacity. Item 3 increases shear stress of turbulent flow compared to when only liquid, thereby improving the micronizing capacity on the molecules in the liquid, by mixing minute gas particles into the liquid to create a gas-liquid mixture. It is preferable to preliminarily store which of these is to be performed for each analysis item.

In other words, the parameters of re-discharge amount, re-discharge speed, and the number of gas-liquid mixture times (the number of discharge stirring times) can be expected to have the following effects.
Increased re-discharge amount: Promotes homogenization of liquids.
Increased re-discharge speed: Promotes homogenization and increases shear stress.
Increased gas-liquid mixture times: Increases shear stress on aggregates.

There is a trade-off between shear stress and bubble mixing. That is, if shear stress is to be increased, bubbles will be mixed in. If it is desired to suppress the mixing of bubbles, shear stress is reduced. With only two choices of entraining or not entraining bubbles, there is a possibility that the necessary and sufficient shear stress and bubble mixing may not be satisfied when measuring any desired analysis item. Therefore, it is preferable to determine the optimum values of the above parameter combinations for each analysis item according to the properties of the reagent, and preliminarily set them for each analysis item.

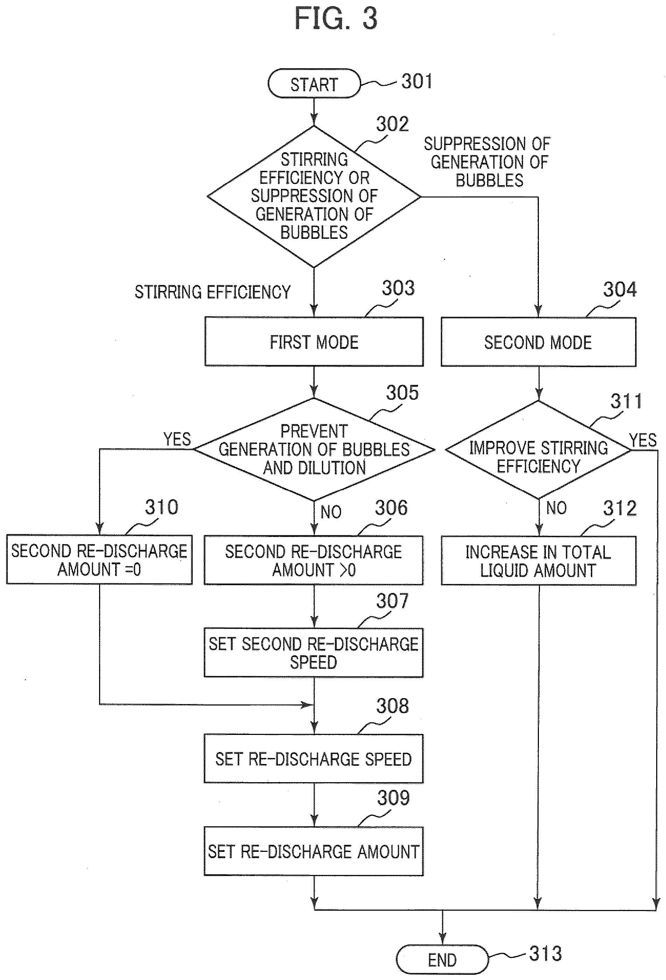

Users can optionally select the stirring method according to the type of analysis item. A flow for selecting a discharge stirring method according to the characteristics of the target item and the expected analytical accuracy will be described with reference to FIG. 3.

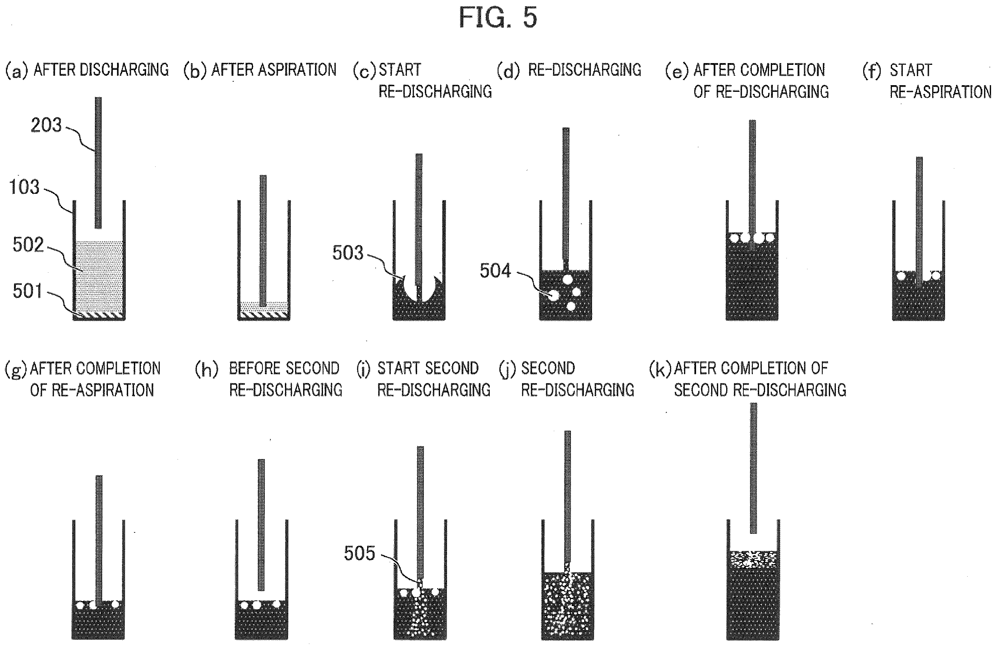

In flow 302, if the user determines that it is necessary to prioritize the efficiency of stirring the reaction liquid over suppressing the impact of bubble mixing in the reaction liquid on the analysis results, the user can select a first mode of stirring. In flow 303, the first mode is a double-stirring operation in which liquid is discharged into a reaction container, the liquid in the reaction container is aspirated, the liquid is re-discharged, the liquid is further re-aspirated, and the liquid is second re-discharged. The operation in the first mode will be described in detail later with reference to FIG. 5.

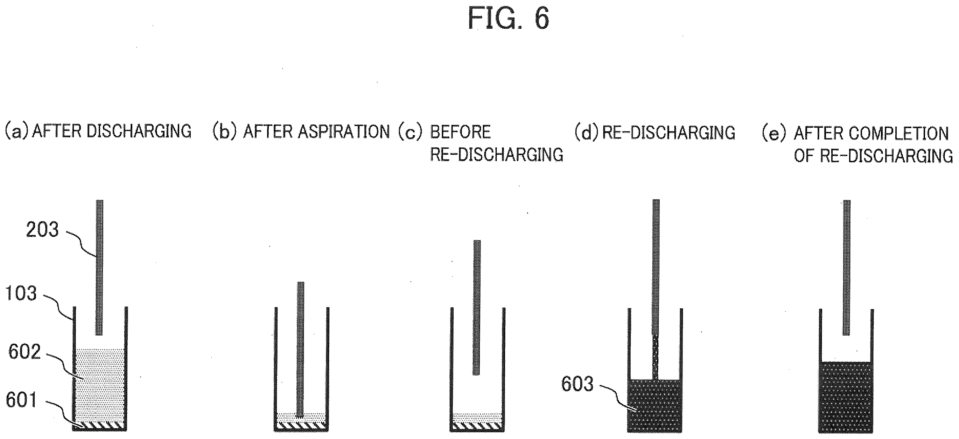

On the other hand, in flow 302, if the user determines that the bubble mixing in the reaction liquid will have a large impact on the analysis results and prioritizes bubble suppression over stirring efficiency, the user can select a second mode of stirring. In flow 304, the second mode is a single-stirring operation in which liquid is discharged into a reaction container, the liquid in the reaction container is aspirated, the liquid is re-discharged, then the liquid is not re-aspirated. The operation in the second mode will be described in detail later with reference to FIG. 6.

By selecting the first mode, priority is given to stirring efficiency, and then in flow 305, prevention of bubble generation and dilution is selected. When the generation of bubbles and dilution are not prevented and stirring efficiency is prioritized, the re-discharge amount, re-discharge speed, and second re-discharge amount and second re-discharge speed can be set optionally in flows 306 to 309. This can realize a stirring pattern according to the stirring difficulty of the analysis item. By increasing the re-discharge amount and the second re-discharge amount, the stirring efficiency is improved, but conversely, a frequency of bubble generation increases. By increasing the re-discharge speed and the second re-discharge speed, the stirring efficiency is improved, but conversely, the frequency of bubble generation increases.

On the other hand, when it is desired to suppress the generation of bubbles while improving the stirring efficiency, the second re-discharge amount in the first mode is set to 0 in flow 310. This can select an operation that does not involve re-aspiration and second re-discharge, even though it is the first mode. However, the first mode without the second re-discharge is inferior in stirring efficiency to the first mode with the second re-discharge, and is inferior in bubble suppression to the second mode.

In the second mode in flow 304, the re-discharge amount and re-discharge speed cannot be optionally set, but are automatically set according to the total liquid amount. This can realize a discharge stirring operation specialized in bubble suppression. In flow 311, when it is desired to improve the stirring efficiency while enhancing the bubble suppression, the total liquid amount of the reaction liquid is increased in flow 312. By increasing the total liquid amount, the stirring efficiency is improved, and furthermore, since the bubble suppression operation is selected according to the total liquid amount, the bubble suppression effect is also maintained.

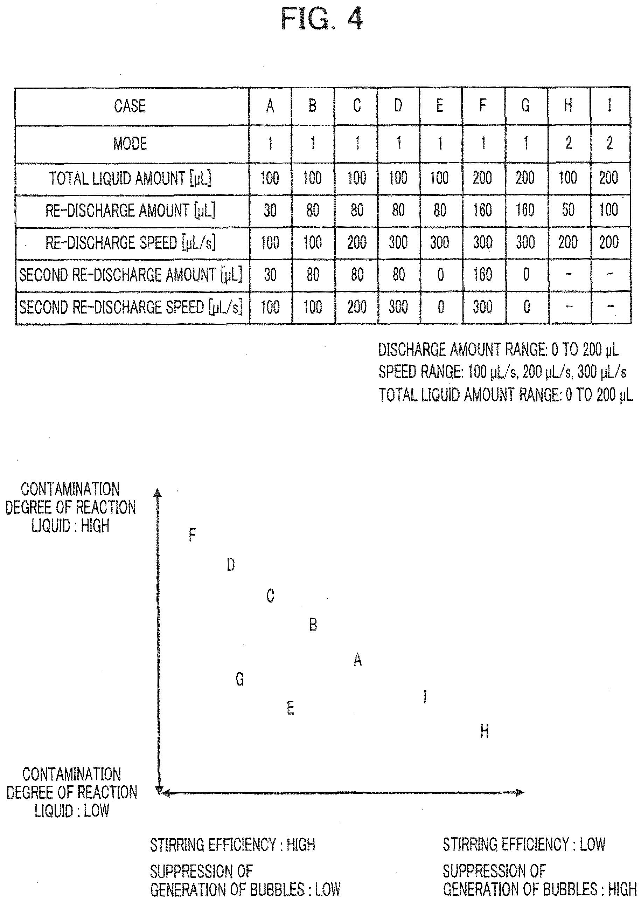

FIG. 4 shows an example of the relationship between the stirring efficiency and the bubble suppression effect in the first and second modes.

The first mode is shown in cases A through G. Advantage of the first mode is that the stirring efficiency is high. By performing two successive discharge stirring operations, a gas-liquid mixture is generated in the reaction liquid. Molecules that tend to aggregate in liquids are effectively micronized into smaller particles by the flow of increased shear stress caused by gas-liquid mixture, and the effective concentration of molecules that are important in enzyme reactions and antigen-antibody reactions is increased, thereby promoting the reactions.

The shear stress of gas-liquid mixture tends to increase as the second re-discharge speed increases. However, the first mode has two weaknesses. One is that bubbles are inevitably mixed into the liquid. Depending on the analysis item, bubbles in the liquid may promote oxidation and suppress the reaction. Furthermore, in the case of analysis involving absorbance measurement, bubbles may obstruct the light path, making it impossible to measure absorbance correctly. Another weakness is that, because the discharging stirring operation is repeated twice, the number of contacts with the inner wall of the probe increases compared to the case of discharge stirring only once, which promotes a contamination degree of the reaction liquid.

For example, in the case of an automatic analyzer in which the probe is filled with water, repeated discharge stirring operations increase the number of times that the reaction liquid becomes contaminated by water remaining on the inner wall of the probe, diluting the reaction liquid. There is a trade-off between improving the stirring efficiency and the two weaknesses. The relationship is shown in the graph of FIG. 4.

Case A shows, in the first mode, a case in which the total liquid amount of reaction liquid is 100 µL, the re-discharge amount is 30 µL, the re-discharge speed is 100 µL/s, the second re-discharge amount is 30 µL, and the second re-discharge speed is 100 µL/s. Using this case as a reference point, other cases will be described.

Case B shows, in the first mode, a case in which the total liquid amount of reaction liquid is 100 µL, the re-discharge amount is 80 µL, the re-discharge speed is 100 µL/s, the second re-discharge amount is 80 µL, and the second re-discharge speed is 100 µL/s. In case B, since the re-discharge amount and the second re-discharge amount are larger than in case A, the stirring efficiency is increased, simultaneously the frequency of bubble generation is increased.

Case C shows, in the first mode, a case in which the total liquid amount of reaction liquid is 100 µL, the re-discharge amount is 80 µL, the re-discharge speed is 200 µL/s, the second re-discharge amount is 80 µL, and the second re-discharge speed is 200 µL/s. In case C, since the re-discharge speed and the second re-discharge speed are faster than in case B, the stirring efficiency is increased, simultaneously the frequency of bubble generation is increased.

Case D shows, in the first mode, a case in which the total liquid amount of reaction liquid is 100 µL, the re-discharge amount is 80 µL, the re-discharge speed is 300 µL/s, the second re-discharge amount is 80 µL, and the second re-discharge speed is 300 µL/s. In case D, since the re-discharge speed and the second re-discharge speed are faster than in case C, the stirring efficiency is increased, simultaneously the frequency of bubble generation is increased.

Case E shows, in the first mode, a case in which the total liquid amount of reaction liquid is 100 µL, the re-discharge amount is 80 µL, the re-discharge speed is 300 µL/s, the second re-discharge amount is 0 µL, and the second re-discharge speed is 0 µL/s. In case E, since the second discharge stirring operation is not performed, the stirring efficiency is lower than in case D, but the bubble generation can be suppressed and the contamination degree of the reaction liquid is reduced.

Case F shows, in the first mode, a case in which the total liquid amount of reaction liquid is 200 µL, the re-discharge amount is 160 µL, the re-discharge speed is 300 µL/s, the second re-discharge amount is 160 µL, and the second re-discharge speed is 300 µL/s. In case F, since the total liquid amount is greater than in case D, the stirring efficiency is increased, simultaneously the frequency of bubble generation is increased. Since the re-discharge amount and the second re-discharge amount are also increased, the contamination degree of the reaction liquid is greater than in case D.

Case G shows, in the first mode, a case in which the total liquid amount of reaction liquid is 200 µL, the re-discharge amount is 160 µL, the re-discharge speed is 300 µL/s, the second re-discharge amount is 0 µL, and the second re-discharge speed is 0 µL/s. In case E, since the second discharge stirring operation is not performed, the stirring efficiency is lower than in case F, but the bubble generation can be suppressed and the contamination degree of the reaction liquid is reduced. In addition, since the total liquid amount is increased compared to case E, the stirring efficiency is improved.

The second mode is shown in cases H and I. Advantage of the second mode is that it can suppress the bubble generation in the reaction liquid. By performing a predetermined discharge stirring operation once for the total liquid amount, discharge stirring can be performed without generating bubbles in the reaction liquid.

Due to the operational characteristics of the discharge stirring, which involves aspirating and discharging the reaction liquid, bubbles are likely to be included in the reaction liquid due to liquid entrainment and discharging segmental air within the probe. However, as mentioned above, there is a risk that bubbles in the reaction liquid may adversely affect the analysis results depending on the analysis item.

To solve this problem, this embodiment has the second mode that prioritizes the suppression of bubbles, as opposed to the first mode that prioritizes stirring efficiency. This can provide appropriate discharge stirring operations for analysis items that require bubble suppression. However, in the second mode, since the double-stirring operation cannot be performed to improve the stirring efficiency, the only way to improve the stirring efficiency is to increase the total liquid amount. An increase in the total liquid amount leads to an increase in the reagent usage, which has a disadvantage of being poor cost performance.

Case H shows, in the second mode, a case in which the total liquid amount of reaction liquid is 100 µL, the re-discharge amount is 50 µL, and the re-discharge speed is 200 µL/s. Although case H has lower stirring efficiency, it is more effective in suppressing bubbles and also causes less contamination degree of the reaction liquid.

Case I shows, in the second mode, a case in which the total liquid amount of reaction liquid is 100 µL, the re-discharge amount is 50 µL, and the re-discharge speed is 200 µL/s. Case I can improve the stirring efficiency more than case H while maintaining the bubble suppression effect of the second mode.

Detailed operation of a double-stirring in the first mode will be described with reference to FIG. 5.

FIG. 5(a): A liquid 501 is entered in advance into the reaction container 103. A reagent 502 held in the dispensing probe 203 is discharged inside the reaction container 103. The force of discharge causes the reagent 502 and the liquid 501 to be partially mixed together.

FIG. 5(b): While the dispensing probe 203 is being lowered, a partially mixed liquid 501 and reagent 502 are aspirated into the inside of the probe.

FIG. 5(c): While the dispensing probe 203 is being raised, a liquid mixture 503 is re-discharged into the reaction container 103. At this time, the liquid mixture 503 rises up along the inner wall of the reaction container 103 and then lowers due to gravity, causing air to be entrained.
Consequently, a plurality of bubbles 504 is generated in the liquid mixture 503.

FIG. 5(d): During the discharge of the liquid mixture 503, the dispensing probe 203 rises while maintaining a constant distance from the liquid level. Rising of the liquid mixture 503 along the inner wall of the reaction container 103 settles down over time. On the other hand, the bubbles 504 generated in the liquid by the entrainment in FIG. 5(c) rise to the liquid level.

FIG. 5(e): After the re-discharge is completed, the bubbles 504 in the liquid mixture 503 rise vertically upward and form a bubble layer on the liquid level. After the re-discharge is completed, the tip of the dispensing probe 203 is immersed in the liquid mixture 503.

FIG. 5(f): Aspiration of the liquid mixture 503 is started. At this time, the dispensing probe 203 immersed in the liquid mixture 503 is controlled to lower while maintaining length of the immersed tip. A flow generated by the re-aspiration aspirates a portion of layer of the bubbles 504 into the probe. Finally, the liquid mixture 503 and the bubbles 504 are randomly aspirated into the dispensing probe 203.

FIG. 5(g): When re-aspiration is completed, the probe tip is in the liquid. Some of the bubbles 504 are aspirated into the probe, while the rest remains forming a bubble layer on the top of liquid level.

FIG. 5(h): The dispensing probe 203 starts to rise.

FIG. 5(i): The second re-discharge is started at the timing when the tip of the dispensing probe 203 becomes higher than the liquid level by a specified amount. At this time, the bubbles aspirated into the dispensing probe 203 become micro bubbles 505 of 1 mm or less due to a turbulence caused by a discharge flow in the dispensing probe 203.

The micro bubbles 505 are second re-discharged together with the liquid mixture 503 into the reaction container. At this time, since the liquid mixture 503 is second re-discharged from within or from an upper portion of the bubble layer formed on the liquid level of the liquid mixture 503, a stirring flow including the bubbles 504 and micro bubbles 505 is formed in the liquid mixture 503.

Formation probability of the micro bubbles 505 depends on an inner diameter of the dispensing probe 203 and the second re-discharge speed. Since the inner diameter of the dispensing probe 203 is uniquely determined by the automatic analyzer, the user can control a generation of the micro bubbles 505 by selecting the second re-discharge speed within a predefined range.

FIG. 5(j): The liquid mixture 503 that has been second re-discharged contains the micro bubbles 505. Since the micro bubbles move randomly in the reaction container, the liquid mixture 503 becomes a gas-liquid mixture. The gas-liquid mixture increases the shear stress on the molecules in the liquid compared to when only the liquid is stirred, resulting in an increased micronizing capacity to discharge stirring.

FIG. 5(k): After the second re-discharge is completed, the flow of the liquid mixture 503 subsides, then the generated micro bubbles begin to be layered on the liquid level.

Detailed operation of a single-stirring in the second mode will be described with reference to FIG. 6.

FIG. 6(a): A preliminarily discharged liquid 601 has been entered into the reaction container 103. A reagent 602 held in the dispending probe 203 is discharged into the reaction container 103. The force of discharge causes the reagent 602 and the liquid 601 to be partially mixed together. In order to prevent a stochastic generation of bubbles resulting from segmental air in the liquid, the distance between the probe tip and the liquid level is controlled so that the bubbles discharged from the probe tip burst before penetrating the liquid.

FIG. 6(b): While the dispensing probe 203 is being lowered, a partially mixed liquid 601 and reagent 602 are aspirated into the inside of the probe. In FIG. 6(a), since no bubbles are generated, there is no risk of bubbles being aspirated into the probe.

FIG. 6(c): The probe tip rises above the liquid level. A distance between a residual liquid in the reaction container and the probe tip is controlled to be greater than in the first mode. Since the discharged liquid mixture spreads downward in a fan shape, a contact area between the discharge flow and the residual liquid increases compared to the first mode. This makes it more difficult for liquid to be entrained during re-discharge.

FIG. 6(d): Re-discharge is started. The re-discharge speed is controlled to a flow speed at which liquid entrainment is not generated, therefore the user cannot optionally set the re-discharge amount and re-discharge speed. No bubbles are present in the liquid mixture during re-discharge.

FIG. 6(e): After the re-discharge is completed, no bubbles are present in the liquid mixture.

### List of Reference Signs

- 100:: sample container
- 101:: reagent bottle
- 102:: disk
- 103:: reaction container
- 104:: incubator
- 105:: dispensing unit
- 106:: controller
- 107:: input/output unit
- 108:: storage unit
- 201:: shaft
- 202:: arm
- 203:: dispensing probe
- 204:: syringe pump
- 205:: tube
- 206:: electromagnetic valve
- 207:: plunger
- 208:: system water container
- 501:: preliminarily discharged liquid
- 502:: reagent
- 503:: liquid mixture
- 504:: bubble
- 505:: micro bubble
- 601:: preliminarily discharged liquid
- 602:: reagent
- 603:: liquid mixture

## Claims

1. A liquid stirring method for an automatic analyzer provided with a dispensing probe for aspirating and/or discharging a liquid, the method comprising:
a first aspiration step of aspirating a first liquid to be stirred by the dispensing probe;
a second aspiration step of aspirating a second liquid to be stirred in a state where the first liquid to be stirred has been received in the dispensing probe; and
a first stirring step of discharging the first liquid to be stirred and the second liquid to be stirred into a container, wherein:
in the second aspiration step, air is also aspirated during aspiration of the second liquid to be stirred; and
in the first stirring step, the first liquid to be stirred and the second liquid to be stirred are discharged into the container from above a liquid level of the liquid received in the container.

2. The liquid stirring method for the automatic analyzer according to claim 1, further comprising, between the first aspiration step and the second aspiration step, a segmental air aspiration step of aspirating an air phase for suppressing mixture of the first liquid to be stirred and the second liquid to be stirred.

3. The liquid stirring method for the automatic analyzer according to claim 1, further comprising:
a re-aspiration step of re-aspirating a liquid mixture of the first liquid to be stirred and the second liquid to be stirred by the dispensing probe so as to contain a bubble in the liquid mixture which has been discharged into the container in the first stirring step; and
a second stirring step of discharging the liquid mixture of the first liquid to be stirred and the second liquid to be stirred into the container from above the liquid level of the liquid received in the container, the liquid mixture having been received in the dispensing probe.

4. The liquid stirring method for the automatic analyzer according to claim 3, wherein the second stirring step is not executed in accordance with an analysis item allocated to the liquid mixture.

5. The liquid stirring method for the automatic analyzer according to claim 3, wherein an aspiration amount of the liquid mixture of the first liquid to be stirred and the second liquid to be stirred in the re-aspiration step is set to zero in accordance with an analysis item allocated to the liquid mixture.

6. The liquid stirring method for the automatic analyzer according to claim 4, wherein
in the case where the second stirring step is not executed, the first stirring step is executed such that
in the first aspiration step, the dispensing probe aspirates the second liquid to be stirred at a position under a liquid level of the second liquid to be stirred during aspiration of the second liquid to be stirred; and
in the first stirring step, the first liquid to be stirred and the second liquid to be stirred are discharged into the container at a position under the liquid level of the liquid received in the container.

7. A liquid stirring method for an automatic analyzer provided with a dispensing probe for aspirating and/or discharging a liquid, the method comprising:
a first aspiration step of aspirating a first liquid to be stirred by the dispensing probe;
a second aspiration step of aspirating a second liquid to be stirred in a state where the first liquid to be stirred has been received in the dispensing probe; and
a first stirring step of discharging the first liquid to be stirred and the second liquid to be stirred into a container;
a re-aspiration step of re-aspirating a liquid mixture of the first liquid to be stirred and the second liquid to be stirred by the dispensing probe, the liquid mixture having been received in the container; and
a second stirring step of discharging the liquid mixture of the first liquid to be stirred and the second liquid to be stirred into the container, the liquid mixture having been received in the dispensing probe, wherein:
a correlation among a total liquid amount of the first liquid to be stirred and the second liquid to be stirred, a discharge amount of the first liquid to be stirred and the second liquid to be stirred, which are discharged into the container simultaneously in the first stirring step, and a speed of discharging the first liquid to be stirred and the second liquid to be stirred is preliminarily stored in multiple patterns; and
a pattern for a stirring operation is selected from the stored multiple patterns in accordance with an analysis item allocated to the first liquid to be stirred.

8. The liquid stirring method for the automatic analyzer according to claim 7, further comprising:
a re-aspiration step of re-aspirating the liquid mixture of the first liquid to be stirred and the second liquid to be stirred by the dispensing probe, the liquid mixture having been received in the container; and
a second stirring step of discharging the liquid mixture of the first liquid to be stirred and the second liquid to be stirred into the container, the liquid mixture having been received in the dispensing probe, wherein:
a correlation between a discharging amount of the first liquid to be stirred and the second liquid to be stirred, which are discharged into the container simultaneously in the second stirring step, and a speed of discharging the first liquid to be stirred and the second liquid to be stirred is stored with a pattern in the first stirring step; and
a pattern for the stirring operation is selected from the stored patterns in accordance with an analysis item allocated to the first liquid to be stirred.

9. The liquid stirring method for the automatic analyzer according to claim 7 or claim 8, wherein in the step of discharging the liquid mixture of the first liquid to be stirred and the second liquid to be stirred into the container, the liquid mixture having been received in the dispensing probe, when discharging the liquid mixture into the container, a distance between the dispensing probe and a liquid level of the received liquid mixture is stored in the stored pattern.

10. An automatic analyzer provided with a controller of controlling mechanisms including the dispensing probe so as to implement the liquid stirring method for the automatic analyzer according to any one of claims 1 to 8.

## Amended claims

### Amended claims under Art. 19.1 PCT

1. (Deleted)

2. (Deleted)

3. (Amended) A liquid stirring method for an automatic analyzer provided with a dispensing probe for aspirating and/or discharging a liquid, the method comprising:
a first aspiration step of aspirating a first liquid to be stirred by the dispensing probe;
a second aspiration step of aspirating a second liquid to be stirred in a state where the first liquid to be stirred has been received in the dispensing probe; and
a first stirring step of discharging the first liquid to be stirred and the second liquid to be stirred into a container, wherein
in the second aspiration step, air is also aspirated during aspiration of the second liquid to be stirred,
in the first stirring step, the first liquid to be stirred and the second liquid to be stirred are discharged into the container from above a liquid level of the liquid received in the container, and
the liquid stirring method further includes:
a re-aspiration step of re-aspirating a liquid mixture of the first liquid to be stirred and the second liquid to be stirred by the dispensing probe so as to contain a bubble in the liquid mixture which has been discharged into the container in the first stirring step; and
a second stirring step of discharging the liquid mixture of the first liquid to be stirred and the second liquid to be stirred into the container from above the liquid level of the liquid received in the container, the liquid mixture having been received in the dispensing probe.

4. The liquid stirring method for the automatic analyzer according to claim 3, wherein the second stirring step is not executed in accordance with an analysis item allocated to the liquid mixture.

5. The liquid stirring method for the automatic analyzer according to claim 3, wherein an aspiration amount of the liquid mixture of the first liquid to be stirred and the second liquid to be stirred in the re-aspiration step is set to zero in accordance with an analysis item allocated to the liquid mixture.

6. The liquid stirring method for the automatic analyzer according to claim 4, wherein
in the case where the second stirring step is not executed, the first stirring step is executed such that
in the first aspiration step, the dispensing probe aspirates the second liquid to be stirred at a position under a liquid level of the second liquid to be stirred during aspiration of the second liquid to be stirred; and
in the first stirring step, the first liquid to be stirred and the second liquid to be stirred are discharged into the container at a position under the liquid level of the liquid received in the container.

7. (Amended) The liquid stirring method for the automatic analyzer according to claim 3, wherein
a correlation among a total liquid amount of the first liquid to be stirred and the second liquid to be stirred, a discharge amount of the first liquid to be stirred and the second liquid to be stirred, which are discharged into the container simultaneously in the first stirring step, and a speed of discharging the first liquid to be stirred and the second liquid to be stirred is preliminarily stored in multiple patterns, and
a pattern for a stirring operation is selected from the stored multiple patterns in accordance with an analysis item allocated to the first liquid to be stirred.

8. The liquid stirring method for the automatic analyzer according to claim 7, further comprising:
a re-aspiration step of re-aspirating the liquid mixture of the first liquid to be stirred and the second liquid to be stirred by the dispensing probe, the liquid mixture having been received in the container; and
a second stirring step of discharging the liquid mixture of the first liquid to be stirred and the second liquid to be stirred into the container, the liquid mixture having been received in the dispensing probe, wherein
a correlation between a discharging amount of the first liquid to be stirred and the second liquid to be stirred, which are discharged into the container simultaneously in the second stirring step, and a speed of discharging the first liquid to be stirred and the second liquid to be stirred is stored with a pattern in the first stirring step, and
a pattern for the stirring operation is selected from the stored patterns in accordance with an analysis item allocated to the first liquid to be stirred.

9. The liquid stirring method for the automatic analyzer according to claim 7 or claim 8, wherein in the step of discharging the liquid mixture of the first liquid to be stirred and the second liquid to be stirred into the container, the liquid mixture having been received in the dispensing probe, when discharging the liquid mixture into the container, a distance between the dispensing probe and a liquid level of the received liquid mixture is stored in the stored pattern.

10. (Deleted)

11. (Added) The liquid stirring method for the automatic analyzer according to claim 3, further comprising, between the first aspiration step and the second aspiration step, a segmental air aspiration step of aspirating an air phase for suppressing mixture of the first liquid to be stirred and the second liquid to be stirred.

12. (Added) An automatic analyzer provided with a controller of controlling mechanisms including the dispensing probe so as to implement the liquid stirring method for the automatic analyzer according to any one of claims 3 to 8 and 11.

Statement under Art. 19.1 PCT

Claims 1, 2, and 10 have been deleted.
Amended Claim 3 has been converted into an independent claim by incorporating the content of Claim 1, to which the original Claim 3 was dependent.
Amended Claim 7 has been modified to depend on amended Claim 3, instead of its previous dependency.
Newly added Claim 11 is a modified version of original Claim 2, now dependent on amended Claim 3.
Newly added Claim 12 is a modified version of original Claim 10, now dependent on any one of amended Claims 3 to 8 or Claim 11.
